# EUROPEAN PATENT APPLICATION

(11) **EP 3 340 074 A1**
(43) Date of publication of application: **27.06.2018**
(21) Application number: 16836438.8
(22) Date of filing: 18.05.2016
(51) Int. Cl.: G06F 17/30

(54) **METHOD AND SYSTEM FOR PROCESSING PICTURE INFORMATION BASED ON MOBILE TERMINAL**

(30) Priority: 20.08.2015 CN 201510513559
(71) Applicant: Huizhou TCL Mobile Communication Co., Ltd., Huizhou, Guangdong 516006 (CN)
(72) Inventor: LEI, Ming, Huizhou Guangdong 516006 (CN)
(74) Representative: Petraz, Gilberto Luigi
(86) International application number: PCT/CN2016/082509
(87) International publication number: WO 2017/028573

(57) **Abstract**

The present disclosure provides a picture information processing method based on a mobile terminal, where the picture information processing method based on a mobile terminal includes: generating, by the mobile terminal, a query request information according to a information of a picture of an object taken by a user and a shooting positional information of the object, and sending a query request information to the back-end server; searching and matching, by the back-end server, corresponding introductory information of the object, and sending the introductory information of the object back to the mobile terminal. The present disclosure makes the user easily obtain the introductory information of the object, which provides convenience for the user.

## Description

### BACKGROUND OF THE INVENTION

### 1. Field of the Invention

The present disclosure relates to the field of mobile terminals, and more particularly to a picture information processing method and system based on a mobile terminal.

### 2. Description of the Prior Art

With development of mobile communication and continuous improvement of living standards of people, various mobile terminals are being used more and more, such as mobile phones. The mobile phones of the prior art have more and more functions. A camera has become an essential function of the mobile terminal.

With smartphones becoming popular, a user may use a camera thereof to take pictures of scenery, people, buildings, or other objects in various environments. When the user takes pictures of the above objects, the user probably does not know information of these objects. Usually, the user searches for the information in a network environment or other environment after the user takes the pictures of the above things if the user wants to know the information of the above things. For example, when the user takes pictures of a mountain, the user probably does not know information of the mountain, such as name of the mountain, height of the mountain. When the user takes pictures of a historical relic, the user also does not know the history of the historical relic. The user needs to spend more time to search for related information afterwards and it is hard for the user to maintain the same enthusiasm in knowing the story behind the object just as what the user had at the moment of taking the pictures.

Therefore, the prior art needs to be improved and developed.

### SUMMARY OF THE INVENTION

Based on deficiency of the prior art, the aim of the present disclosure is to provide a picture information processing method based on a mobile terminal and system capable of querying introductory information of the object according to the positional information of the shooting picture and the picture of the shooting object, which makes the user easily understand the introductory information of the object, directly avoiding more operation time of the querying spent by the user, providing the user with convenience, and improving the user experience.

The technical scheme of the present disclosure is as follow:

A picture information processing method based on a mobile terminal, comprising steps:
preestablishing a back-end server and maintaining a query information database of an object in the back-end server;
receiving, by the mobile terminal, a command of a user to activate a camera, taking a picture of the object and obtaining a shooting positional information of the object, where introductory information is needed to be queried for the object; generates, by the mobile terminal, a query request information according to a information of a picture of the object taken by the user and the shooting positional information of the object, and sends the query request information to the back-end server; and
searching and matching, by the back-end server, corresponding introductory information of the object from the maintained query information database according to the query request information, and sending the introductory information of the object back to the mobile terminal; receiving, by the mobile terminal, the introductory information of the object to display;
the method further comprising: adding an identification icon of the introductory information in advance on a camera browser interface of the mobile terminal; when a data item of a database corresponding to the picture stores path of the introductory information, the identification icon of the introductory information is automatically displayed on the picture browser interface; receiving an operational command that the user clicks the identification icon of the introductory information, accessing the stored path of the introductory information according to the operational command and obtaining a file of the introductory information; and popping up, by the camera, an interface that displays the introductory information related to the object in the picture.

In the picture information processing method based on the mobile terminal, before receiving the command of the user to activate the camera by the mobile terminal, further comprising:
adding a function option querying the introductory information of the object into option on a menu of the camera of the mobile terminal in advance according to the information of the picture of the object and the shooting positional information of the object.

In the picture information processing method based on the mobile terminal, the step for preestablishing the back-end server and maintaining the query information database of the object in the back-end server, comprises:
uploading information data including information of the picture of the object to the back-end server in advance; scanning and analyzing, by the back-end server, the picture of the object to extract a feature code corresponding to the object; recording the feature code corresponding to the object in the data item corresponding to the object; and
building an index according to a coordinate position or/and the extracted feature code in the uploaded information data of the object in the query information database of the object maintained by the back-end server.

In picture information processing method based on the mobile terminal, the step for receiving, by the mobile terminal, the command of the user to activate the camera, taking a picture of the object and obtaining the shooting positional information of the object, where introductory information is needed to be queried for the object; generating, by the mobile terminal, the query request information according to the information of a picture of the object taken by the user and the shooting positional information of the object, and sending the query request information to the back-end server, the step comprises:
activating a function option querying the introductory information of the object into options on a menu of the camera and starting a function to obtain the shooting positional information of the object when the mobile terminal receives the command of the user to activate the camera;
receiving the command of the user and taking a picture of the object by the mobile terminal, where introductory information is needed to be queried for the object; and
generating the query request information by the mobile terminal according to the information of the picture of the object taken by the user and the shooting positional information of the object, and sending the query request information to the back-end server.

The picture information processing method based on the mobile terminal, the step for searching and matching, by the back-end server, corresponding introductory information of the object from the maintained query information database according to the query request information, and sending the introductory information of the object back to the mobile terminal; receiving, by the mobile terminal, the introductory information of the object to display, the step comprises:
analyzing feature of the information of the picture of the object and making the shooting positional information of the shooting object as a primary index when the back-end server receives the query request information sent by the mobile terminal;
searching and matching corresponding introductory information of the object from the maintained query information database according to the index by the back-end server, and sending the introductory information of the object back to the mobile terminal; and collecting data of the gestures of the user and duration of gestures;
displaying the introductory information of the object when the mobile terminal receives the introductory information of the object sent by the back-end of the server.

In picture information processing method based on the mobile terminal, the function to obtain the shooting positional information of the object is global position system (GPS) of the mobile terminal.

A picture information processing method based on a mobile terminal, comprising steps:
preestablishing a back-end server and maintaining a query information database of an object in the back-end server;
receiving, by the mobile terminal, a command of a user to activate a camera, taking a picture of the object and obtaining a shooting positional information of the object, where introductory information is needed to be queried for the object; generating, by the mobile terminal, a query request information according to a information of a picture of the object taken by the user and the shooting positional information of the object, and sending the query request information to the back-end server; and
searching and matching, by the back-end server, corresponding introductory information of the object from the maintained query information database according to the query request information, and sending the introductory information of the object back to the mobile terminal; receiving, by the mobile terminal, the introductory information of the object to display.

In the picture information processing method based on the mobile terminal, before receiving the command of the user to activate the camera by the mobile terminal, further comprising:
adding a function option querying the introductory information of the object into options on a menu of the camera of the mobile terminal in advance according to the information of the picture of the object and the shooting positional information of the object.

In the picture information processing method based on the mobile terminal, the step for preestablishing the back-end server and maintaining the query information database of the object in the back-end server, comprises:
uploading an information data including information of the picture of the object to the back-end server in advance; scanning and analyzing, by the back-end server, the picture of the object to extract a feature code corresponding to the object; recording the feature code corresponding to the object in the data item corresponding to the object; and
building an index according to a coordinate position or/and the extracted feature code in the uploaded information data of the object in the query information database of the object maintained by the back-end server.

The picture information processing method based on the mobile terminal, the step for receiving, by the mobile terminal, the command of the user to activate the camera, taking the picture of the object and obtaining the shooting positional information of the object, where introductory information is needed to be queried for the object; generating, by the mobile terminal, the query request information according to the information of a picture of the object taken by the user and the shooting positional information of the object, and sending the query request information to the back-end server, the step comprises:
activating a function option querying the introductory information of the object into options on a menu of the camera and starting a function to obtain the shooting positional information of the object when the mobile terminal receives the command of the user to activate the camera;
receiving the command of the user and taking a picture of the object by the mobile terminal, where introductory information is needed to be queried for the object; and
generating the query request information by the mobile terminal according to the information of the picture of the object taken by the user and the shooting positional information of the object, and sending the query request information to the back-end server.

The picture information processing method based on the mobile terminal, the step for searching and matching, by the back-end server, corresponding introductory information of the object from the maintained query information database according to the query request information, and sending the introductory information of the object back to the mobile terminal; receiving, by the mobile terminal, the introductory information of the object to display, the step comprises:
analyzing feature of the information of the picture of the object and making the shooting positional information of the shooting object as a primary index when the back-end server receives the query request information sent by the mobile terminal;
searching and matching corresponding introductory information of the object from the maintained query information database according to the index by the back-end server, and sending the introductory information of the object back to the mobile terminal; and collecting data of the gestures of the user and duration of gestures;
displaying the introductory information of the object when the mobile terminal receives the introductory information of the object sent by the back-end of the server.

In picture information processing method based on the mobile terminal, the function to obtain the shooting positional information of the object is global position system (GPS) of the mobile terminal.

The picture information processing system based on the mobile terminal, comprising:
a server setup module preestablishing a back-end server and maintain a query information database of an object in the back-end server;
a query request information generating module receiving a command of a user by the mobile terminal to activate camera, and taking a picture of the object and obtaining shooting positional information of the object, where introductory information is needed to be queried for the object; the mobile terminal generates a query request information according to a information of a picture of the object taken by the user and the shooting positional information of the object, and sends the query request information to the back-end server; and
a searching and matching introductory information module searching and matching corresponding introductory information of the object from the maintained query information database according to the query request information by the back-end server, and sending the introductory information of the object back to the mobile terminal; the mobile terminal receives the introductory information of the object to display.

In the picture information processing system based on the mobile terminal, further comprising:
an introductory information function menu setting module adding the function option querying the introductory information of the object into options on a menu of the camera of the mobile terminal in advance according to the information of the picture of the object and the shooting positional information of the object;
an extracting feature code module uploading an information data including information of the picture of the object to the back-end server in advance; the back-end server scans and analyzes the picture of the object to extract a feature code corresponding to the object; the feature code corresponding to the object is recorded in a data item corresponding to the object; and
a building index module building an index according to a coordinate position or/and the extracted feature code in the uploaded information data of the object in the query information database of object maintained by the back-end server.

In the picture information processing system based on the mobile terminal, the query request information generating module comprises:
a function activating unit activating a function option that queries the introductory information of the object in a menu option of the camera and starting a function to obtain the shooting positional information of the object when the mobile terminal receives a command to activate the camera;
a shooting unit receiving the command of the user and taking a picture of the object by the mobile terminal, where introductory information is needed to be queried for the object; and
a generating and sending unit generating a query request information by the mobile terminal according to the information of the picture of the object taken by the user and the shooting positional information of the object, and sending the query request information to the back-end server.

In picture information processing system based on the mobile terminal, the searching and matching introductory information module comprises:
an index unit analyzing a feature of the information of the picture of the object and making the shooting positional information of the object as a primary index when the back-end server receives the query request information sent by the mobile terminal;
a searching unit searching and matching corresponding introductory information of the object from the maintained query information database according to the index by the back-end server, and sending the introductory information of the object back to the mobile terminal; and
a displaying unit displaying the introductory information of the object when the mobile terminal receives the introductory information of the object sent by the back-end of the server.

The present disclosure provides the picture information processing method based on the mobile terminal and system, and makes the mobile terminal add a new function: the new function is the introductory information of the shot object. The back-end server is set up, and the back-end server stores the database comprising the introductory information of the object. The mobile terminal generates the query request information according to the shooting positional information of the shooting object and the picture of the object, and sends the query request information to the back-end server. The back-end server searches and matches the information introduction information of the object taken by the user according to the generated query request information sent by the mobile terminal, and sends searched information to the mobile terminal, the mobile terminal receives the introductory information and the introductory information is displayed. In addition, the shooting positional information of the object is obtained, which greatly reduces the number of the objects that need to be compared by the back-end server, and lessens workload that the back-end server recognizes, compares, and finds the introductory information of correct object, further increasing processing speed. The present disclosure queries introductory information of the object according to the shooting positional information of the picture and the picture of the shooting object, which makes the user easily understand the introductory information of the object, directly avoiding more operation time of the querying spent by the user, providing the user with convenience, and improving the user experience.

### BRIEF DESCRIPTION OF THE DRAWINGS

FIG. 1 is a flowchart of a picture information processing method based on a mobile terminal of a preferable embodiment of the present disclosure.
FIG. 2 is an arrangement of a structural diagram of servers in the picture information processing method based on the mobile terminal of the present disclosure.
FIG. 3 is a schematic diagram of a query shutter on a camera interface of the picture information processing method based on the mobile terminal of the preferable embodiment of the present disclosure.
FIG. 4 is a process flowchart of sending a query request by a mobile phone of a specific embodiment of the picture information processing method based on the mobile terminal of the preferable embodiment of the present disclosure.
FIG. 5 is a process flowchart of receiving an introductory information by a mobile phone of a specific embodiment of the picture information processing method based on the mobile terminal of the preferable embodiment of the present disclosure.
FIG. 6 is a process flowchart of querying the introductory information by a back-end server of a specific embodiment of the picture information processing method based on the mobile terminal of the preferable embodiment of the present disclosure.
FIG. 7 is a function schematic diagram of a picture information processing system based on the mobile terminal of the preferable embodiment of the present disclosure.

### DETAILED DESCRIPTION OF THE PREFERRED EMBODIMENTS

In order to more clearly illustrate aim and technical scheme of the present disclosure, the present disclosure will further be described in detail. It should be understood that the present disclosure has been described with reference to certain preferred and alternative embodiments which are intended to be exemplary only and do not limit the full scope of the present disclosure.

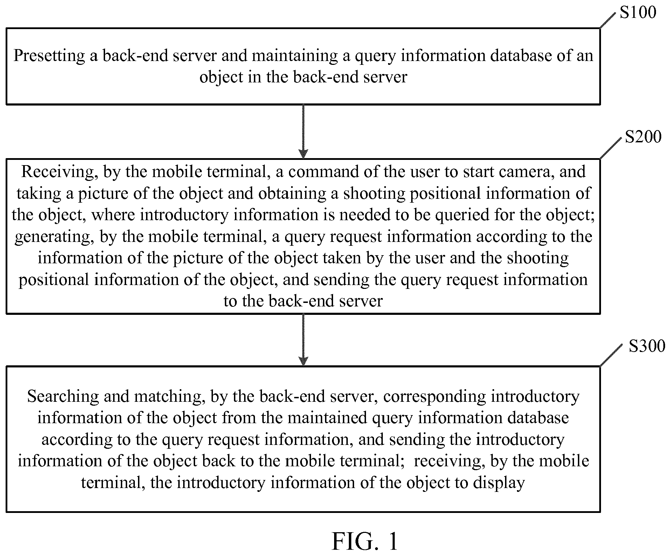

As shown in FIG. 1, FIG.1 is a flowchart of a picture information processing method based on a mobile terminal of a preferable embodiment of the present disclosure. The picture information processing method based on the mobile terminal in FIG. 1 comprises:
step100: preestablishing a back-end server and maintaining a query information database of an object in the back-end server.

The present disclosure takes the mobile terminal as a mobile phone as an example to explain. Various kinds of the mobile phones are used more and more, and a camera of the mobile phone has becomes an essential function of the mobile terminal. With smartphones becoming popular, a user may use the camera to take pictures of scenery, people, buildings or other things in various environments. When the user takes pictures of the above things, the user may not understand information of the above things. Usually, the user searches for information in a network environment or other environment after the user takes pictures of the above things if the user wants to know the information of the above things. The user needs to spend more time to search for related information afterwards and it is hard for the user to maintain the same enthusiasm in knowing the story behind the object just as what the user had at the moment of taking the pictures. And this function improves user experience, where the function is that the user can immediately get the introductory information of the object when the user takes pictures.

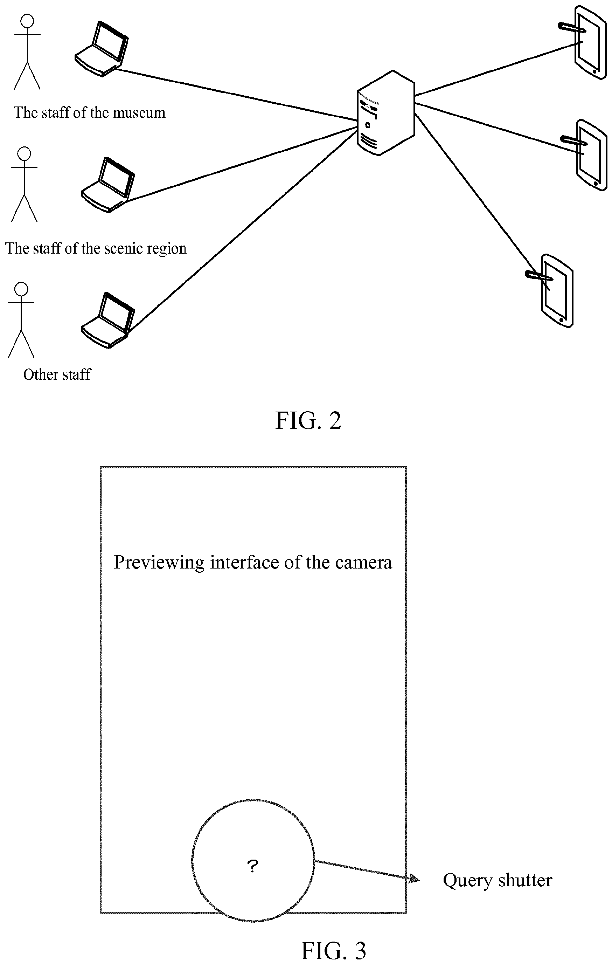

In the present disclosure, the back-end server is preestablished and the query information database of the object in the back-end server is maintained. To be specific, the back-end server is preestablished, and the back-end server is used to maintain the query information database of the object in the back-end server. Maintained information data should be informational data of the scenery, people, buildings, or other objects. FIG. 2 is an arrangement of a structural diagram of servers of a specific embodiment of the present disclosure. Query information data of the object in the back-end server is provided by all kinds of units that need to provide the introductory information of the object, such as a museum, a scenic region, or other unit. A staff of the unit, that needs to provide the introductory information, accesses the back-end server by equipment (such as a computer), provides data webpage and uploads related data online, and data information of each object updated to database of the server comprises: a name, a position, a recognizable range, the introductory information, a picture and an expiration date from a date that the message submits successfully. It should be adjusted according to actual situations. In the present disclosure, the data uploaded by the staff of the unit need to be reviewed by a manager of the data of the back-end server, and the data is approved by the manager of the data of the back-end server and successfully updates to the back-end server.

In the embodiment of the present disclosure, the manager of data of the server needs to maintain and manage information of the data of the database. Specifics can be found in Table 1 as follows:

**Table 1: the information of the data of the server maintained by the manager**

| Name (Numbe r) | Position(Co ordinates) | Recognizable Range | Introductory Information | Picture(Multi -angles) | Expiration date |
|---|---|---|---|---|---|
| Bronze Mask-x xx | Longitude xxx, Latitude xxx | 10 meter | xxxx | Picture 1, Picture 2..... | 2 Years |
| Snow Mountai n-xxx | Longitude xxx, Latitude xxx | 3 kilometer | xxxx | Picture 1, Picture 2..... | 20 Years |

In a specific embodiment, the manager numbers each object, and adds coordinates of a longitude and a latitude for a position of each object in the Table 1. The coordinates of the longitude and the latitude indicate positional information of the each object. The recognizable range of the each object is different according to size of the each object. For example, a picture of the bronze mask taken over 10 meters away is smaller (for a normal mobile phone without optical zoom) and a user may not take a picture of it if it is over 10 meters away, thus, the recognizable range of the bronze mask is closer. However, for the snow mountain, a picture of the snow mountain taken over several kilometers away is clear, thus, the recognizable range of the snow mountain is far. The introductory information of items of the Table 1 can be text or data about the introductory information of the object.

In the pictures of the Table 1, pictures uploaded by the staff of the unit are divided according to different angles. For the expiration date of the items of the Table 1, data information of different object set different expiration dates. For example, the bronze mask may change position because an exhibition hall of the museum may be adjusted, the coordinates of the bronze mask also change, and the expiration date of the data information of the bronze mask should not be long and is required to be updated at regular intervals or in time. The coordinates of the snow mountain will not almost change, thus, the expiration date of the data information of the snow mountain should be long.

In the present disclosure, the information data including information of the picture of the object needs to upload to the back-end server in advance, and the back-end server scans and analyzes the picture of the object to extract a feature code corresponding to the object. The feature code corresponding to the object is recorded in data item corresponding to the object. The query information database of object maintained by the back-end server is according to the coordinates position or/and the extracted feature code in the uploaded information data of the object to set an index. In the specific embodiment, to be specific, the staff of the unit that needs to provide the introductory information of the object uploads the data information including information of the picture of the object, is reviewed by the manager of the data of the back-end server, and is approved. The manager of the data maintains the information of the data as shown in the Table 1, and the pictures from multi-angles of the object in the Table 1 are scanned and analyzed in the back-end server to extract the feature code corresponding to the object and the feature code corresponding to the object is recorded in the data item corresponding to the object. Information of the data item is generated as shown in Table 2 after the feature of the picture is analyzed and processed.

**Table 2: the information of the data item after the feature of the picture is analyzed and processed**

| Name (Number ) | Position(C oordinates) | Recogniza ble Range | Introductory Information | Picture(Mul ti-angles) | Feature code | Expiration date |
|---|---|---|---|---|---|---|
| Bronze Mask-xx x | Longitude xxx, Latitude xxx | 10 meter | xxxx | Picture 1, Picture 2..... | Feature code 1, 2..... | 2 Years |
| Snow Mountai n-xxx | Longitude xxx, Latitude xxx | 3 kilometer | xxxx | Picture 1, Picture 2..... | Feature code 1, 2..... | 20 Years |

The extracted feature code of the object can be text, data, or other information that distinguish the feature of each object in Table 2.

The feature of the picture is analyzed and processed by the back-end server, the query information database of the objects, maintained by the back-end server, comprises the information data of the object as shown in the Table 2, and the database needs to set an index or multilevel index according to the position (coordinates) of items of the Table 2, which is convenient to search and match. For example, in the position (coordinates) of items of the Table 2, the coordinates of the longitude and the latitude indicate the positional information of the each object, and 0.1 degrees of the longitude and the latitude maximum corresponds 11.1 km, which can initially determine distance of the object. To be specific, the index is set according to the position (coordinates) of item of the Table 2 based on 0.1 degrees as a unit, and the object about in range of 10km can be found according the index. By parity of reasoning, the index is set according to the position (coordinates) of items of the Table 2 based on 0.0001 degrees as a unit, and the object about in range of 10m can be found according the index. Furthermore, in the embodiment, the index is set according to the position (coordinates) and the feature code of items of the Table 2, which is convenient to quickly query and compare for the picture.

S200: receiving, by the mobile terminal, a command of the user to activate camera, and taking a picture of the object and obtaining a shooting positional information of the object, where introductory information is needed to be queried for the object; generating, by the mobile terminal, a query request information according to the information of the picture of the object taken by the user and the shooting positional information of the object, and sending the query request information to the back-end server.

In the present disclosure, a menu option of the camera of the mobile terminal adds a function option querying the introductory information of the object in advance according to the information of the picture of the object and the shooting positional information of the object. Namely, a menu program of the camera of the phone adds the function option querying the introductory information of the object in advance. Furthermore, a query mode is added in a program of the camera, the user chooses to activate the function option of the introductory information of the object according to requirements, and the program of the camera automatically starts the query mode, as follows: a shutter icon is changed to a query shutter icon on a camera preview interface of the mobile phone. As shown in FIG. 3, FIG. 3 is a schematic diagram of a query shutter on a camera interface of the picture information processing method based on the mobile terminal of the preferable embodiment of the present disclosure. In addition, it should be understood that the function of the query mode also can be arranged at a setting item of the menu of browser picture of the mobile phone, when the user wants to query the introductory information for the object of the browser picture, the query request information is generated by the setting item of the menu, and the query request information is sent to the back-end server.

The step 200 specifically comprises the following steps:
step 201: activating the function option querying the introductory information of the object in the menu option of the camera and starting the function to obtain the shooting positional information of the object when the mobile terminal receives the command of the user to activate the camera.

In the specific embodiment, when the user opens the camera application, the function option of the introductory information is activated in the menu option, and an application obtaining the positional information of the object is started, further entering next step 202. Furthermore, the program of the camera is set to make the user choose to activated the function option of the introductory information and simultaneously forcedly start the applicant obtaining the shooting positional information of the object.
step 202: receiving, by the mobile terminal, the command of the user, and taking a picture of the object, where introductory information is needed to be queried for the object.

In the specific embodiment, the user activates the camera of the mobile phone and simultaneously activates the function option of the introductory information and application obtaining the shooting positional information of the object, after that, the program of the camera automatic starts the query mode, and the shutter icon is changed to the query shutter icon on the preview interface of the camera of the mobile phone, the user makes lens of the camera of the mobile phone align the object that presses the query shutter icon, where introductory information is needed to be queried for the object, and the camera takes pictures of the object, further entering step 203. After the camera takes pictures of the object, the user can make normal picture operation for pictures, such as saving the pictures, adjusting light for the pictures. The program of the camera processes that the query request information is sent. The above operation cannot affect that the program of the camera processes that the query request information is sent.

the step 203: generating, by the mobile terminal, the query request information according to the information of the picture of the object taken by the user and the shooting positional information of the object, and sending the query request information to the back-end server.

In specific embodiment, after the step 202 that takes pictures of the object, where introductory information is needed to be queried for the object, the program of the camera of the mobile phone automatically performs a process that the query request information is sent to the back-end server. To be specific, the operation system of the mobile phone sends a callback to the program of the camera, such as: an android system of the mobile phone sends the callback of the onPictureTaken to the program of the camera, to inform the program of the camera that the picture of the object has been ready, where introductory information is needed to be queried for the object. At the same time, if the program determines the camera starts the query mode and obtains effective shooting positional information of the object, the query request information directly is generated and the query request information is sent to the back-end server. After the mobile phone terminal sends the query request information, waiting for the back-end server sends query result back.

In specific embodiment, after the application obtaining the shooting positional information of the object is started, the shooting positional information of the object is obtained and the shooting positional information of the object is wrote in information of exchangeable image file (EXIF) of the picture. The program of the camera can directly read the shooting positional information from the picture file without extra recording process. In addition, in the embodiment of the present disclosure, the generated query request information can refer to Table 3 as follow.

**Table 3: Query Request Information**

| | | |
|---|---|---|
| Request identification | Data of Picture | Name of Picture |

In the Table 3, the back-end server determines the data sent to the back-end server by the mobile phone is the request identification of the query. The data of the picture includes information of the picture of the object taken by the user and the shooting positional information of the object obtained by the mobile phone. The name of the picture for the back-end server makes no sense, but the back-end server needs to make the name of the picture add the query result when the back-end server sends query result back, which is convenient to the mobile phone terminal find which picture is to query the introductory information for the object.

Furthermore, in the embodiment of the present disclosure, the application obtaining the shooting positional information of the object is global position system (GPS) of the mobile phone.

The step 300: searching and matching, by the back-end server, corresponding introductory information of the object from the maintained query information database according to the query request information, and sending the introductory information of the object back to the mobile terminal. The mobile terminal receives the introductory information of the object to display. In the embodiment of the present disclosure, the step 300 comprises specific step as follow:
the step 301: analyzing feature of the information of the picture of the object and making the shooting positional information of the object as a primary index when the back-end server receives the query request information sent by the mobile terminal.

To be specific, when the back-end server receives the query request information sent by the mobile terminal, namely the back-end server receives the query request information of the Table 3, the back-end server analyzes the feature of the information of the picture of the object from the data of the picture of the query request information and extracts the feature code of the picture of the object. At the same time, the back-end server reads the position coordinates information of the picture from the data of the picture of the query request information and makes the position coordinates information of the picture of the object as a primary index, further entering the step 302.
the step 302: searching and matching, by the back-end server, corresponding introductory information of the object from the maintained query information database according to the index, and sending the introductory information of the object back to the mobile terminal.

To be specific, the query information database of the objects of the back-end server sets index of the position coordinates information according to the step 301, the corresponding object is searched and matched from the information data of the object of the Table 2, corresponding introductory information of the object searched and matched by the back-end server is sent back to the mobile phone, further entering the step 303.

A query process of the back-end server is that: starting to query from near object, and querying from distant object if the near object cannot be found, which speeds up query. In the embodiment of the present disclosure, at the beginning, four numbers after decimal point of longitude and latitude is as accuracy to query the object about in range of ten meters. As long as in the recognizable range, the back-end server compares the feature code of the object of the extracted shoot picture with the feature code of the corresponding object in the recognizable range from the database of the back-end server, and matched object is found, further returning the introductory information of the best matched object. In the recognizable range, if the back-end server compares the feature code of the object of the extracted shoot picture with the feature code of the corresponding object in the recognizable range from the database of the back-end server, the matched object is not found, further continuing to search and query. At subsequence query, query range will be expanded by 10 times each until the query range is a maximum.

In the embodiment of the present disclosure, the specific query process of the back-end server is that: the back-end server queries the object(in the present disclosure, taking degree as a unit, difference between the longitude and the latitude is less than 0.0001 degree) from the Table 2 of the database according to the index of the position coordinates information, where distance between position of the object and the position of the shoot picture is less than 10 meters, such as: the object named as the bronze mask is found according to the index. At the same time, compared the feature code of the picture of the object with the feature code of the bronze mask of the Table 2, if the feature codes match, the corresponding object is found, namely, the bronze mask is the object taken by the user and related introductory information of the bronze mask can be searched from the Table 2. If a plurality of the objects are matched according to the feature code of the picture of the object, namely the matched objects is the bronze mask-001, the bronze mask-002 and so on, the server searches introductory information of an optimum matching object from the Table 2 according to the feature code of the picture of the object.

If the matching object is not found in the range of 10 meters, query range is expanded by 10 times to continue to find. Namely, the back-end server queries the object (in the present disclosure, taking degree as a unit, difference between the longitude and the latitude is less than 0.0001 degree) from the Table 2 of the database, where distance between position of the object and the shooting position of the object is about 100 meters. Compared the feature code of the picture of the object with the feature code of the object of the Table 2, where the distance between position of the object and the shooting position of the object is in range of 100 meters, if the feature codes match, the corresponding object is found, and the introductory information of the corresponding object is found from the Table 2. If the corresponding object is not found in the range of the 100 meters, the object is queried in the range of the 1 kilometer. If the matching object still is not found, the object is queried in the range of the 10 kilometers, where the feature code of the matching object matches with the feature code of the picture of the object. In the embodiment, the 10 kilometers is set as a maximum range by the server. If the matching object still is not found from the database of the server in the maximum range, the server obtains the query result that the introductory information is null.

In the embodiment of the present disclosure, corresponding introductory information of the object is searched and matched by the back-end server, the query result is sent to the mobile phone. The message of the query result can refer to Table 4 as follow.

**the Table 4, the message of the query result**

| | | |
|---|---|---|
| Query result identification | Introductory information | Name of picture |

In the Table 4, the back-end server determines the data sent to the back-end server by the mobile phone is the query request identification.

Furthermore, the back-end server searches and matches, and the back-end server still does not match the introductory information of any object, then, the query result that the introductory information is null is also sent to the mobile phone.

The step S303: receiving, by the mobile terminal, the introductory information of the object sent by the back-end the server to display.

In the embodiment, when the mobile phone receives the message of the query result sent by the back-end of the server and the introductory information in the message of the query result is not null, the program of the camera of the mobile phone finds the corresponding picture according to the name of the picture, the introductory information in the message of the query result is saved as file, file name chooses the name of the picture as suffix, and the data item of the database corresponding to the picture records path of the file that saves the introductory information. Furthermore, in the embodiment of the present disclosure, the camera browser interface adds an identification icon of the introductory information. When the data item of the database corresponding to the picture stores path of the introductory information, the identification icon of the introductory information is automatically displayed on the picture browser interface. The user clicks the identification icon of the introductory information to access the stored path of the introductory information and obtain the file of the introductory information. At that time, the camera pops up an interface that displays the introductory information related to the object in the picture.

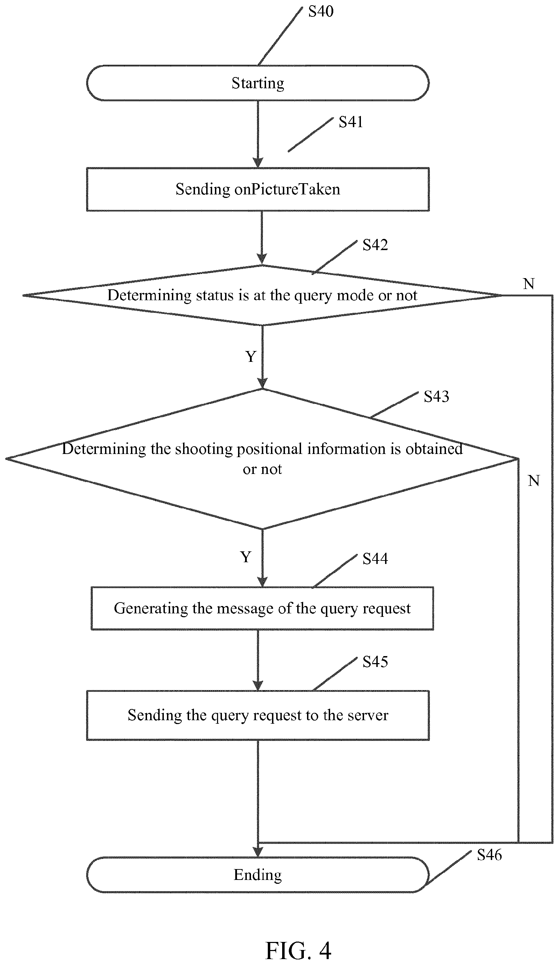

The present disclosure provides a process of sending the query request of a specific embodiment of the picture information processing method based on the mobile terminal. As shown in FIG. 4, FIG. 4 is the process flowchart of sending the query request by the mobile phone of the specific embodiment of the picture information processing method based on the mobile terminal of the preferable embodiment of the present disclosure, where the process comprises:
step 40: starting;
   the process that the mobile phone sends the query request is starting.
step 41: sending onPicutreTaken;
   in the embodiment of the present disclosure, the android system of the mobile phone sends the callback of the onPictureTaken to the menu program of the camera, to inform the menu program of the camera that the picture of the object, where introductory information is needed to be queried for the object and the object has been ready.
step 42: determining status is at the query mode or not;
   determining the picture of the object taken by the mobile phone is at the query mode or not, if the picture of the object taken by the mobile phone is at the query mode, entering step 43, if the picture of the object taken by the mobile phone is not at the query mode, entering step 46.
the step 43: determining the shooting positional information is obtained or not;
   In the step 42, the picture of the object shot by the mobile phone is at the query mode, thus, in the step 43, determining the menu program of the camera of the mobile phone obtains the shooting positional information of the object or not, if the menu program of the camera of the mobile phone obtains the shooting positional information of the object, entering step 44, if the menu program of the camera of the mobile phone does not obtain the shooting positional information of the object, entering the step 46.
the step 44: generating the message of the query request;
   when the program of the mobile phone determines the camera starts the query mode and obtains the effective shooting positional information of the object, the message of the query request directly is generated, further entering the next step.
step 45: sending the query request to the server;
   the mobile phone terminal sends the generated the query request information to the back-end server.
the step 46: ending.
   the mobile phone terminal ends to the process that the mobile phone sends the query request.

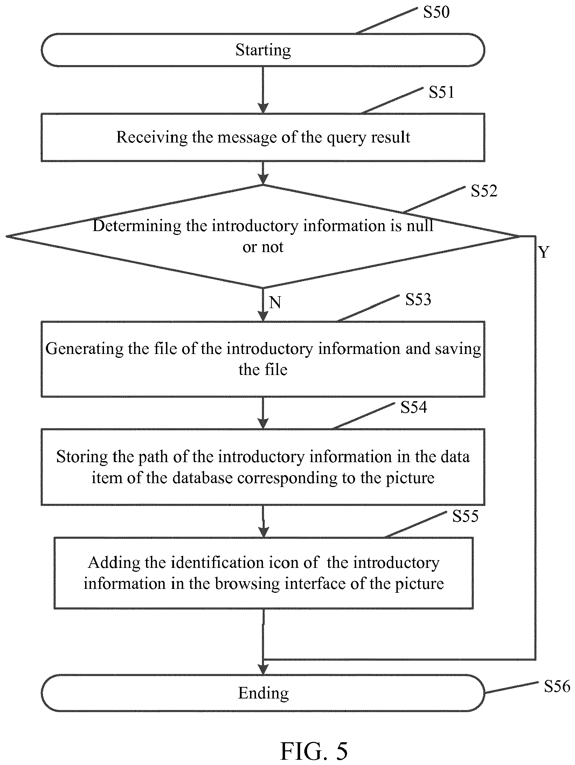

In addition, the present disclosure provides a process receiving the introductory information of the picture information processing method based on the mobile terminal. As shown in FIG. 5, FIG. 5 is a process flowchart of receiving the introductory information of the picture information processing method based on the mobile terminal of the preferable embodiment of the present disclosure, where the process comprises:
step 50: starting;
   the mobile phone terminal starts to receive the introductory information.
step 51: receiving the message of the query result;
   the mobile phone receives the message of the query result sent by the back-end server.
step 52: determining the introductory information is null or not;
   determining the introductory information in the message of the query result sent by the back-end server is null or not, if the introductory information is not null, entering step 53, if the introductory information is null or querying is failure, entering step 56.
the step 53: generating the file of the introductory information and saving the file;
   when the introductory information in the message of the query result sent by the back-end server is not null, the introductory information in the message of the query result is saved as file, file name chooses the name of the picture as suffix, further entering step 54.
the step 54: storing the path of the introductory information in the data item of the database corresponding to the picture;
   storing the path of the introductory information in the data item of the database corresponding to the picture and accessing the stored the path to obtain the generated file of the introductory information in the step 53.
step 55: adding the identification icon of the introductory information in the picture browser interface;
   when the mobile phone stores the path of the introductory information, the preview interface of the picture automatically adds an identification icon of the introductory information. The user clicks the identification icon of the introductory information to access the stored path of the introductory information. At that time, the camera pops up an interface that displays the introductory information related to the object in the picture.
the step 56: ending;
   the mobile phone terminal ends to receive the introductory information.

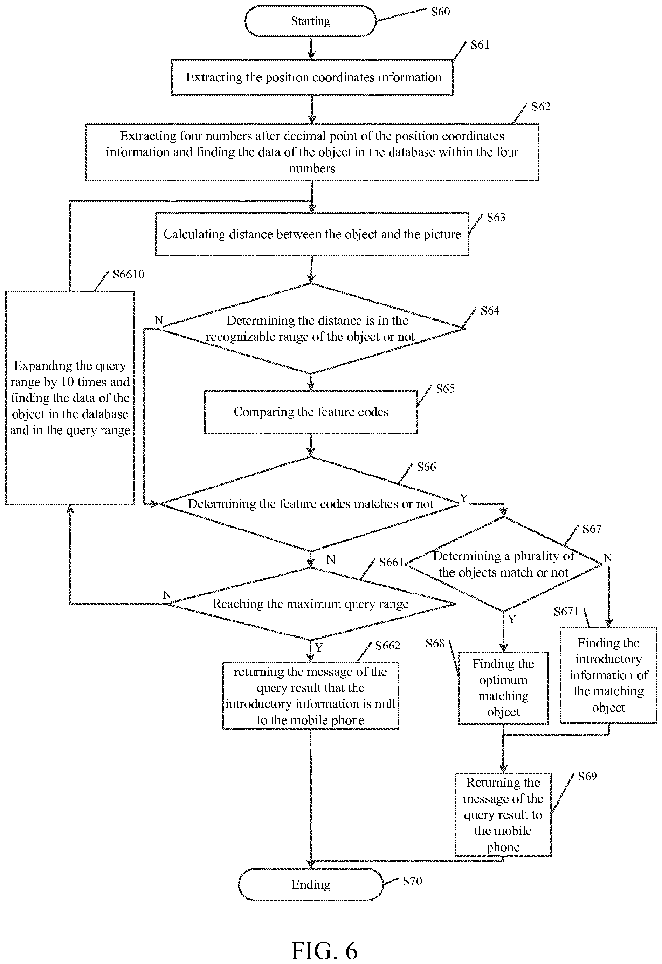

The present disclosure further provides a process querying the introductory information by the back-end server of the picture information processing method based on the mobile terminal. As shown in FIG. 6, FIG. 6 is a process flowchart of querying the introductory information by the back-end server of the picture information processing method based on the mobile terminal of the preferable embodiment of the present disclosure, where the process comprises:
step 60: starting;
   the back-end server starts the query process, namely, the process that corresponding introductory information of the object is searched and matched from the maintained query information database by the back-end server is started.
step 61: extracting the position coordinates information;
   the back-end server extracts the position coordinates information of the picture from the data of the picture of the query request information, namely the longitude and latitude of the position of the picture of the object are obtained, further entering step 62.
the step 62: extracting four numbers after decimal point of the position coordinates information and finding the data of the object in the database within the four numbers.
   the back-end server extracts four numbers after decimal point of the longitude and latitude extracted in the step 61, and finds the data of the object in the database within the four numbers.
step 63: calculating distance between the object and the picture;
   the distant between a determinate position according to the longitude and latitude of the picture of the object and a determinate position of longitude and latitude of the object met requirement in the database is calculated, further entering step 64.
the step 64: determining the distance is in the recognizable range of the object or not;
   determining the distance is in the recognizable range of the object or not, namely all distance data between the picture of the object and the object met requirement is obtained, determining the distance data is in the recognizable range of the object or not, if the distance data is in the recognizable range of the object, directly entering step 65, if the distance data is not in the recognizable range of the object, entering step 66.
the step 65: comparing the feature codes;
   the back-end server compares the extracted feature code of the picture of the object with the feature code of the corresponding object in the recognizable range from the database of the back-end server, further entering the step 66.
the step 66: determining the feature codes matches or not;
   determining the extracted feature code of the picture of the object matches with the feature code of the corresponding object in the recognizable range from the database of the back-end server or not; if the extracted feature code of the picture of the object matches with the feature code of the corresponding object in the recognizable range from the database of the back-end server, entering step 67, if the extracted feature code of the picture of the object does not matches with the feature code of the corresponding object in the recognizable range from the database of the back-end server, entering step 661.
the step 661: reaching the maximum query range;
   the extracted feature code of the picture of the object does not matches with the feature code of the corresponding object in the recognizable range from the database of the back-end server, further continuing to determine the query range in the database is a maximum or not (10 kilometers). If the query range in the database is the maximum, entering step 662, if the query range in the database is not the maximum, entering step 6610.
the step 662: returning the message of the query result that the introductory information is null to the mobile phone;
   when the query range is the maximum, the object matching with the extracted feature code of the picture of the object in the database of the server still is not found, the server obtains the query result that the introductory information is null and sends the message of the query result that introductory information is null to the mobile phone terminal.
the step 6610: expanding the query range by 10 times and finding the data of the object in the database and in the query range.
the step 661 determines the query range of the object in the database does not reach the maximum query range of 10 kilometers, the server expands the query range by 10 times, namely the accuracy of the longitude and latitude reduces one digit (removing the last digit), such as the accuracy of the longitude and latitude is from the 0.0001 degree to the 0.001 degree, and the data of the object in the database and in the query range is found, and queried range is simultaneously excluded, further entering the step 63.
the step 67: determining a plurality of the objects match or not;
   determining the feature codes of a plurality of the object match with the feature code of the picture of the object, if the feature codes of a plurality of the object match with the feature code of the picture of the object, entering the step 68, the feature codes of a plurality of the object do not match with the feature code of the picture of the object, entering step 671.
the step 671: finding the introductory information of the matching object;
   step 68: finding the optimum matching object.
   when the feature codes of a plurality of the objects match with the feature code of the picture of the object, the server finds the introductory information of an optimum matching object from a plurality of the objects according to the feature code of the picture of the object, further entering step 69.
the step 69: returning the message of the query result to the mobile phone.
   the server returns the message of the query result that the introductory information is null to the mobile phone terminal, further entering to step 70.
the step 70: ending;
   the back-end server ends the query process.

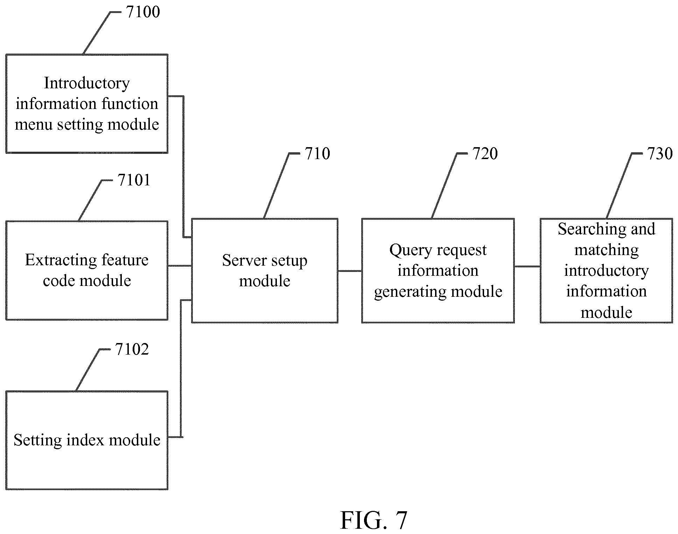

Based on the embodiment of the above method, the present disclosure further provides a picture information processing system based on the mobile terminal. As shown in FIG. 7, FIG. 7 is a function schematic diagram of the picture information processing system based on the mobile terminal of the preferable embodiment of the present disclosure, where the picture information processing system comprises a server setup module 710, a query request information generating module 720, and a searching and matching introductory information module 730,

The server setup module 710 is used to preestablish the back-end server and maintain the query information database of the object in the back-end server. The specific is described as the above.

The query request information generating module 720 is used to receive the command of the user by the mobile terminal to activate the camera, and take a picture of the object and obtain the shooting positional information of the object, where introductory information is needed to be queried for the object. The mobile terminal generates the query request information according to the information of the picture of the object taken by the user and the shooting positional information of the object, and sends the query request information to the back-end server. The specific is described as the above.

The searching and matching introductory information module 730 is used to search and match, by the back-end server, corresponding introductory information of the object from the maintained query information database according to the query request information, and send the introductory information of the object back to the mobile terminal. The mobile terminal receives the introductory information of the object to display. The specific is described as the above.

The picture information processing system further comprises:
an introductory information function menu setting module 7100 adding the function option querying the introductory information of the object in the menu option of camera of the mobile terminal in advance according to the information of the picture of the object and the shooting positional information of the object. The specific is described as the above.
an extracting feature code module 7101 uploading the information data including information of the picture of the object to the back-end server in advance, the back-end server scans and analyzes the picture of the object to extract feature code corresponding to the object. The feature code corresponding to the object is recorded in the data item corresponding to the object. The specific is described as the above.
a building index module 7102 building the index according to the coordinate position or/and the extracted feature code in the uploaded information data of the object in the query information database of object maintained by the back-end server. The specific is described as the above.

The query request information generating module 720 comprises:
a function activating unit activating the function option that queries the introductory information of the object in the menu option of the camera and starting the function to obtain the shooting positional information of the object when the mobile terminal receives the command of the user to activate the camera; the specific is described as the above.
a shooting unit receiving the command of the user by the mobile terminal and taking a picture of the object, where introductory information is needed to be queried for the object; specifics are described above.
a generating and sending unit generating the query request information by the mobile terminal according to the information of the picture of the object taken by the user and the shooting positional information of the object , and sending the query request information to the back-end server; specifics are described above.

A searching and matching introductory information module comprises
an index unit analyzing features of the information of the picture of the object and making the shooting positional information of the object as a primary index when the back-end server receives the query request information sent by the mobile terminal; specifics are described above.
a searching unit searching and matching corresponding introductory information of the object from the maintained query information database according to the index by the back-end server, and sending the introductory information of the object back to the mobile terminal; specifics are described above.
a displaying unit displaying the introductory information of the object when the mobile terminal receives the introductory information of the object sent by the back-end of the server; specifics are described above.

As the above, the present disclosure provides the picture information processing method based on the mobile terminal and system, and makes the mobile terminal add a new function: the new function is the introductory information of the shot object. The back-end server is set up, and the back-end server stores the database comprising the introductory information of the object. The mobile terminal generates the query request information according to the shooting positional information of the object and the picture of the object, and sends the query request information to the back-end server. The back-end server searches and matches the introductory information of the object taken by the user according to the generated query request information sent by the mobile terminal, and sends searched information to the mobile terminal; the mobile terminal receives the introductory information and displays the introductory information. In addition, the shooting positional information of the object is obtained, which greatly reduces the number of the objects that need to be compared by the back-end server, and lessens workload that the back-end server recognizes, compares, and finds the introductory information of correct object, further increasing processing speed. The present disclosure queries introductory information of the object according to the shooting positional information of the picture and the picture of the object, which makes the user easily understand the introductory information of the object, directly avoiding more operation time of the querying spent by the user, providing the user with convenience, and improving the user experience.

The picture information processing method based on a mobile terminal and the picture information processing system based on a mobile terminal belong to same conception. Any method of the embodiments of the picture information processing method based on a mobile terminal can be operated on the picture information processing system based on the mobile terminal, and a specific realization process has been described in detail as the above embodiment of the picture information processing method, there will be no details. Thus, there will not be described.

It should be noted: for the picture information processing method, a person skilled in the art should understand and achieve that all or part process of the picture information processing method based on the mobile terminal of the embodiment of the present disclosure are controlled by computer program to complete. The computer program may be stored in a computer readable storage medium, such as the computer program is stored in a memory of the smart watch, and the computer program is performed by at least one processor in the smart watch, which includes any above method of the embodiment of the present disclosure in the performing. The computer readable storage medium is a diskette, an optical disk, a read-only memory, or a random access memory and so on.

For the picture information processing system based on the mobile terminal, different modules may integrate in one processing chip or may exit as separate physical presence. Or two or more modules integrate in one module. The above integrate module can use hardware to achieve and also use software function module to achieve. If the integrate module uses software function module to achieve and is as standalone product to sell or use, the integrate module may store in the computer readable storage medium, where the computer readable storage medium is the read-only memory, the diskette, or the optical disk and so on.

It should be understood that present disclosure is not limited to the exemplary examples. Person skilled in the art should understand and achieve that equivalent replacement and improvement is according to the above description. The equivalent replacements and improvements should be considered to belong to the protection scope of the present disclosure

## Claims

1. A picture information processing method based on a mobile terminal, comprising steps:
preestablishing a back-end server and maintaining a query information database of objects in the back-end server;
receiving, by the mobile terminal, a command of a user to activate a camera of the mobile terminal, taking a picture of an object and obtaining a shooting positional information of the object, wherein introductory information is needed to be queried for the object; generating, by the mobile terminal a query request information according to information of a picture of the object taken by the user and shooting positional information of the object, and sending the query request information to the back-end server; and
searching and matching, by the back-end server, corresponding introductory information of the object from the maintained query information database according to the query request information, and sending the introductory information of the object back to the mobile terminal; receiving, by the mobile terminal, the introductory information of the object to display;
the method further comprising: adding an identification icon of the introductory information in advance on a camera browser interface of the mobile terminal, when a data item of a database corresponding to the picture stores path of the introductory information, the identification icon of the introductory information is automatically displayed on the picture browser interface; receiving an operational command that the user clicks the identification icon of the introductory information, accessing the stored path of the introductory information according to the operational command and obtaining a file of the introductory information, and popping up, by the camera, an interface that displays the introductory information related to the object in the picture.

2. The picture information processing method based on the mobile terminal as claimed in claim 1, before receiving, by the mobile terminal, the command of the user to activate the camera, further comprising:
adding a function option querying the introductory information of the object into options on a menu of the camera of the mobile terminal in advance according to the information of the picture of the object and the shooting positional information of the object.

3. The picture information processing method based on the mobile terminal as claimed in claim 1, wherein the step for preestablishing the back-end server and maintaining the query information database of the objects in the back-end server comprises:
uploading information data including information of the picture of the object to the back-end server in advance; scanning and analyzing, by the back-end server, the picture of the object to extract a feature code corresponding to the object; recording the feature code corresponding to the object in the data item corresponding to the object; and
building an index according to a coordinate position or/and the extracted feature code in the uploaded information data of the object in the query information database of the objects maintained by the back-end server.

4. The picture information processing method based on the mobile terminal as claimed in claim 1, wherein the step for receiving, by the mobile terminal, the command of the user to activate the camera, taking the picture of the object and obtaining the shooting positional information of the object, introductory information is needed to be queried for the object; generating, by the mobile terminal, the query request information according to the information of a picture of the object taken by the user and the shooting positional information of the object, and sending the query request information to the back-end server, comprises:
activating a function option querying the introductory information of the object into options on a menu of the camera and starting a function to obtain the shooting positional information of the object when the mobile terminal receives the command of the user to activate the camera;
receiving the command of the user and taking a picture of the object by the mobile terminal, wherein introductory information is needed to be queried for the object; and
generating the query request information by the mobile terminal according to the information of the picture of the object taken by the user and the shooting positional information of the object, and sending the query request information to the back-end server.

5. The picture information processing method based on the mobile terminal as claimed in claim 1, the step for searching and matching, by the back-end server, corresponding introductory information of the object from the maintained query information database according to the query request information, and sending the introductory information of the object back to the mobile terminal; receiving, by the mobile terminal, the introductory information of the object to display, the step comprises:
analyzing feature of the information of the picture of the object and making the shooting positional information of the object as a primary index when the back-end server receives the query request information sent by the mobile terminal;
searching and matching corresponding introductory information of the object from the maintained query information database according to the index by the back-end server, and sending the introductory information of the object back to the mobile terminal; and
displaying the introductory information of the object when the mobile terminal receives the introductory information of the object sent by the back-end of the server.

6. The picture information processing method based on the mobile terminal as claimed in claim 4, the function to obtain the shooting positional information of the object is global position system (GPS) of the mobile terminal.

7. A picture information processing method based on a mobile terminal, comprising steps:
preestablishing a back-end server and maintaining a query information database of objects in the back-end server;
receiving, by the mobile terminal, a command of a user to activate a camera, taking a picture of an object and obtaining a shooting positional information of the object, wherein introductory information is needed to be queried for the object; generating, by the mobile terminal, a query request information according to a information of a picture of the object taken by the user and the shooting positional information of the object, and sending the query request information to the back-end server; and
searching and matching, by the back-end server, corresponding introductory information of the object from the maintained query information database according to the query request information, and sending the introductory information of the object back to the mobile terminal; receiving, by the mobile terminal, the introductory information of the object to displays.

8. The picture information processing method based on the mobile terminal as claimed in claim 7, before receiving, by the mobile terminal, the command of the user to activate the camera, further comprising:
adding a function option querying the introductory information of the object into options on a menu of the camera of the mobile terminal in advance according to the information of the picture of the object and the shooting positional information of the object.

9. The picture information processing method based on the mobile terminal as claimed in claim 7, wherein the step for preestablishing the back-end server and maintaining the query information database of the objects in the back-end server, comprises:
uploading an information data including information of the picture of the object to the back-end server in advance; scanning and analyzing by the back-end server, the picture of the object to extract a feature code corresponding to the object; recording the feature code corresponding to the object in the data item corresponding to the object; and
building an index according to a coordinate position or/and the extracted feature code in the uploaded information data of the object in the query information database of the object maintained by the back-end server.

10. The picture information processing method based on the mobile terminal as claimed in claim 7, wherein the step for receiving, by the mobile terminal, the command of the user to activate the camera, taking the picture of the object and obtaining the shooting positional information of the object, wherein introductory information is needed to be queried for the object; generating, by the mobile terminal, the query request information according to the information of a picture of the object taken by the user and the shooting positional information of the object, and sending the query request information to the back-end server, the step comprises:
activating a function option querying the introductory information of the object into options on a menu of the camera and starting a function to obtain the shooting positional information of the object when the mobile terminal receives the command of the user to activate the camera;
receiving the command of the user and taking a picture of the object by the mobile terminal, wherein introductory information is needed to be queried for the object; and
generating the query request information by the mobile terminal according to the information of the picture of the object taken by the user and the shooting positional information of the object, and sending the query request information to the back-end server.

11. The picture information processing method based on the mobile terminal as claimed in claim 7, wherein the step for searching and matching, by the back-end server, corresponding introductory information of the object from the maintained query information database according to the query request information, and sending the introductory information of the object back to the mobile terminal; receiving, by the mobile terminal, the introductory information of the object to display, the step comprises:
analyzing feature of the information of the picture of the object and making the shooting positional information of the object as a primary index when the back-end server receives the query request information sent by the mobile terminal;
searching and matching corresponding introductory information of the object from the maintained query information database according to the index by the back-end server, and sending the introductory information of the object back to the mobile terminal; and
displaying the introductory information of the object when the mobile terminal receives the introductory information of the object sent by the back-end of the server.

12. The picture information processing method based on the mobile terminal as claimed in claim 10, the function to obtain the shooting positional information of the object is global position system (GPS) of the mobile terminal.

13. A picture information processing system based on a mobile terminal, comprising:
a server setup module preestablishing a back-end server and maintain a query information database of objects in the back-end server;
a query request information generating module receiving a command of a user by the mobile terminal to activate camera, and taking a picture of an object and obtaining shooting positional information of the object, wherein introductory information is needed to be queried for the object; the mobile terminal generates a query request information according to a information of a picture of the object taken by the user and the shooting positional information of the object, and sends the query request information to the back-end server; and
a searching and matching introductory information module searching and matching corresponding introductory information of the object from the maintained query information database according to the query request information by the back-end server, and sending the introductory information of the object back to the mobile terminal; the mobile terminal receives the introductory information of the object to display.

14. The picture information processing system based on the mobile terminal as claimed in claim 13, further comprising:
a introductory information function menu setting module adding a function option querying the introductory information of the object into options on a menu of the camera of the mobile terminal in advance according to the information of the picture of the object and the shooting positional information of the object;
an extracting feature code module uploading information data including information of the picture of the object to the back-end server in advance; the back-end server scans and analyzes the picture of the object to extract a feature code corresponding to the object; the feature code corresponding to the object is recorded in a data item corresponding to the object; and
a building index module building an index according to a coordinate position or/and the extracted feature code in the uploaded information data of the object in the query information database of object maintained by the back-end server.

15. The picture information processing system based on the mobile terminal as claimed in claim 13, wherein the query request information generating module comprises:
a function activating unit activating a function option that queries the introductory information of the object into options on a menu of the camera and starting a function to obtain the shooting positional information of the object when the mobile terminal receives a command of the user to activate the camera;
a shooting unit receiving the command of the user by the mobile terminal and taking a picture of the object, wherein introductory information is needed to be queried for the object; and
a generating and sending unit generating a query request information by the mobile terminal according to the information of the picture of the object taken by the user and the shooting positional information of the object, and sending the query request information to the back-end server.

16. The picture information processing system based on the mobile terminal as claimed in claim 13, wherein the searching and matching introductory information module comprises:
an index unit analyzing a feature of the information of the picture of the object and making the shooting positional information of the object as a primary index when the back-end server receives the query request information sent by the mobile terminal;
a searching unit searching and matching corresponding introductory information of the object from the maintained query information database according to the index by the back-end server, and sending the introductory information of the object back to the mobile terminal; and
a displaying unit displaying the introductory information of the object when the mobile terminal receives the introductory information of the object sent by the back-end of the server.
